# EUROPÄISCHE PATENTSCHRIFT

(11) **EP 1 121 773 B1**
(45) Veröffentlichungstag und Bekanntmachung des Hinweises auf die Patenterteilung: **22.09.2004**
(21) Anmeldenummer: 99970808.4
(22) Anmeldetag: 01.10.1999
(51) Int. Cl.: H04B 7/26

(54) **MOBILFUNKSYSTEM UND MOBILSTATION IM DUPLEX UND SEMIDUPLEXBETRIEB ARBEITEND**
MOBILE RADIO TELEPHONE SYSTEM AND A MOBILE STATION WHICH FUNCTION IN DUPLEX AND SEMI-DUPLEX MODE
SYSTEME RADIOTELEPHONIQUE MOBILE ET STATION MOBILE FONCTIONNANT EN MODE DUPLEX ET EN MODE SEMI-DUPLEX

(30) Priorität: 15.10.1998 DE 19847661
(43) Veröffentlichungstag der Anmeldung: 08.08.2001
(73) Patentinhaber: SIEMENS AKTIENGESELLSCHAFT, 80333 München (DE)
(72) Erfinder: HOFMANN, Ludwig, D-85304 Ilmmünster (DE)
(86) Internationale Anmeldenummer: PCT/DE1999/003166
(87) Internationale Veröffentlichungsnummer: WO 2000/024141

(56) Entgegenhaltungen:
- EP-A- 0 689 303
- GB-A- 2 291 564
- US-A- 5 481 539

## Beschreibung

Die vorliegende Erfindung bezieht sich auf ein Mobilfunksystem und eine Mobilstation, welche zur Durchführung eines Sende/Empfangsbetriebs im Duplex- und Semiduplexbetrieb geeignet sind.

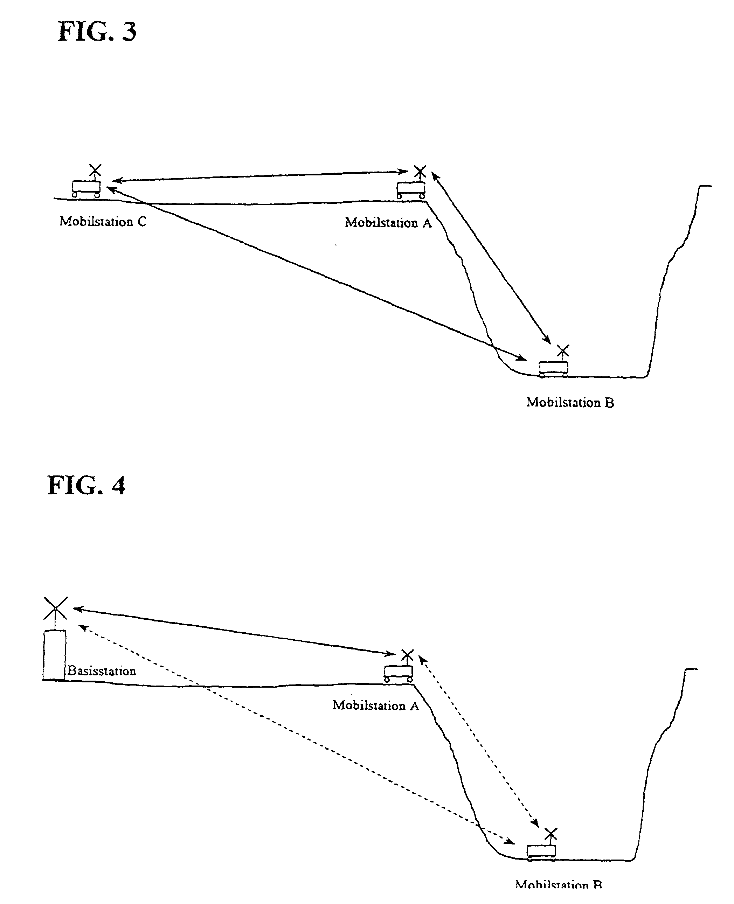

Bisherige im Duplexbetrieb arbeitende Mobilfunksysteme arbeiten mit bestimmten Up- und Downlinkfrequenzen, wobei jede Mobilstation eine direkte Verbindung zu einer Basisstation haben muß. Die Signalübertragung zwischen zwei Mobilstationen erfolgt dabei nicht direkt von einer zur anderen Mobilstation, sondern in Abhängigkeit von dem Aufenthaltsort der Mobilstationen über eine oder mehrere Basisstationen. Hat eine der Mobilstationen keine Verbindung zu einer Basisstation, kann eine Verbindung zu einer anderen Mobilstation nicht hergestellt werden. Fig. 4 stellt eine derartige Situation dar. Zwar kann entsprechend Fig. 4 die Mobilstation A eine Verbindung zur Basisstation herstellen, nicht jedoch die Mobilstation B, da sie außerhalb der Reichweite der Basisstation liegt (z.B. in einem Tal oder einer Brücke). Somit kann eine Verbindung zwischen den Mobilstationen A und B nicht hergestellt werden, auch wenn beispielsweise eine Sichtverbindung zwischen ihnen vorliegt. Da sich dieser Nachteil bei im Duplexbetrieb arbeitenden Mobilfunksystemen bislang nicht beheben ließ, wurden Zusätzliche Systeme wie TETRA (Trans European Trunked Radio Access) entwickelt und aufgebaut, wobei eine direkte Kommunikation zwischen zwei Mobilfunkgeräten ohne Verwendung einer Basisstation erfolgt. Für eine effektive Nutzung der verfügbaren Frequenzen und Basisstationen ist jedoch ein Mobilfunksystem von Vorteil, welches im Duplexbetrieb arbeitet.

Aus WO 98/10483 A ist eine dual-mode Mobilstation bekannt, die ein GSM-sowie ein DECT-Sende/Empfangsteil beinhaltet.

Aufgabe der vorliegenden Erfindung ist es daher, ein Mobilfunksystem und eine Mobilstation zu schaffen, welche neben einem Sende/Empfangsbetrieb im Duplexbetrieb zu einem Sende/Empfangsbetrieb im Nichtduplexbetrieb geeignet sind.

Die Lösung der Aufgabe erfolgt durch die Merkmale der unabhängigen Ansprüche.

Demgemäß wird ein Mobilfunksystem mit einer Mehrzahl von Mobilstationen geschaffen, bei welchem die Mobilstationen Mittel zur Durchführung eines Sende/Empfangsbetriebs im Duplexbetrieb und im Semiduplexbetrieb aufweisen. Die Mobilstationen sind damit geeignet, eine Kommunikation zu einer oder mehreren Mobilstationen im Duplex- und/oder Semiduplexbetrieb herzustellen.

Entsprechend einer Ausführungsform der vorliegenden Erfindung enthält eine erste Mobilstation Mittel zur Durchführung eines Sende/Empfangsbetriebs mit einer Basisstation im Duplexbetrieb und einer zweiten Mobilstation im Semiduplexbetrieb, wodurch eine gleichzeitige Kommunikation von der ersten Mobilstation im Duplexbetrieb zu der Basisstation und zu einer zweiten Mobilstation im Semiduplexbetrieb hergestellt werden kann, selbst wenn die zweite Mobilstation keine Verbindung zu der Basisstation hat.

Des weiteren sind Mittel zur Durchführung eines Sende/Empfangsbetriebs mit der Basisstation im Duplexbetrieb und der zweiten Mobilstation im Semiduplexbetrieb derart vorgesehen, daß der Sende/Empfangsbetrieb zyklisch in Zeitschlitzen durchgeführt wird und die Zeitschlitze für den Duplex- und den Semiduplexbetrieb synchron zueinander verlaufen. Dadurch können die Zeitschlitze für den Duplex- und Semiduplexbetrieb derart (verzahnt) überlagert werden, daß der Sende/Empfangsbetrieb im Duplex- und Semiduplexbetrieb ohne gegenseitige Beeinflussung quasigleichzeitig durchgeführt wird.

Wird die erste Mobilstation mit Mitteln versehen zur Durchführung eines Sende/Empfangsbetriebs mit der Basisstation im Duplexbetrieb und der zweiten Mobilstation im Semiduplexbetrieb derart, daß Signale von der Basisstation über die erste Mobilstation zu der zweiten Mobilstation und umgekehrt übertragen werden, kann eine Kommunikation zwischen der Basisstation und zweiten Mobilstation unter Zwischenschaltung der ersten Mobilstation als "Repeater" auch dann hergestellt werden, wenn die zweite Mobilstation keine direkte Verbindung zu der Basisstation hat.

Entsprechend einer anderen Ausführungsform enthält die erste Mobilstation Mittel zur Durchführung eines Sende/Empfangsbetriebs mit der zweiten und einer dritten Mobilstation im Semiduplexbetrieb, wodurch eine gleichzeitige Kommunikation von der ersten Mobilstation zu der zweiten und dritten Mobilstation im Semiduplexbetrieb ohne Verbindung zu einer Basisstation direkt hergestellt werden kann.

Wird die erste Mobilstation mit Mitteln versehen zur Durchführung eines Sende/Empfangsbetriebs mit der zweiten und dritten Mobilstation im Semiduplexbetrieb derart, daß Signale von der zweiten Mobilstation über die eine Mobilstation zu der dritten Mobilstation und umgekehrt übertragen werden, kann eine Kommunikation zwischen der zweiten und dritten Mobilstation unter Zwischenschaltung der einen Mobilstation als "Repeater" auch dann hergestellt werden, wenn die zweite und dritte Mobilstation keine Verbindung zu einer Basisstation haben.

Koppelt man eine Mehrzahl von den Mobilstationen aneinander, so läßt sich eine beliebig große Kommunikationskette oder ein beliebig großes Kommunikationsnetz erzeugen, wobei eine Kommunikation über eine Mehrzahl von Mobilstationen mit und ohne Verwendung von Basisstationen hergestellt werden kann.

Um die Spannungsversorgungseinrichtung der ersten Mobilstation nicht unkontrolliert zu belasten, ist die erste Mobilstation mit Mitteln zum manuellen oder automatischen Ein- und Ausschalten der Übertragung von Signalen von der zweiten Mobilstation über die erste Mobilstation zur Basisstation oder zur dritten Mobilstation und umgekehrt ausgestattet. Damit kann die Funktion der ersten Mobilstation als "Repeater" aktiviert oder deaktiviert werden.

Die vorliegende Erfindung wird in der nachfolgenden Beschreibung unter Bezugnahme auf die Zeichnung erläutert.
Figuren 1 bis 3 zeigen verschiedene Ausführungsformen bzw. Betriebsarten eines Mobilfunksystems der vorliegenden Erfindung;
Fig. 4 zeigt ein Mobilfunksystem nach dem Stand der Technik;
Fig. 5 zeigt eine Darstellung von zu verwendenden Frequenzbändern; und
Fig. 6 zeigt eine Darstellung von zu verwendenden Zeitschlitzen.

Herkömmliche Mobilfunksysteme, wie z.B. das GSM-System, arbeiten im Duplexbetrieb und meist unter Durchführung eines Zeitschlitzverfahrens, bei welchem Sender und Empfänger zu verschiedenen Zeitpunkten aktiv sind. Der Sender arbeitet dabei im Uplinkfrequenzbereich, während der Empfänger im Downlinkfrequenzbereich arbeitet.

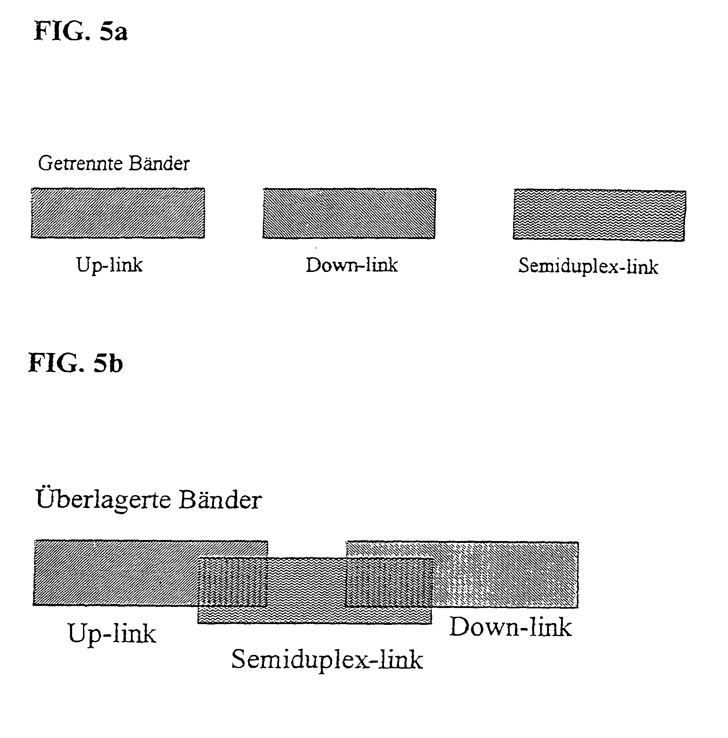

Bei der vorliegenden Erfindung wird als zusätzliches Band ein Semiduplexband benötigt. Entsprechend Fig. 5a kann ein derartiges Band in einem anderen Frequenzbereich liegen oder entsprechend Fig. 5b überlagernd mit den Uplink- und Downlinkfrequenzen angeordnet sein.

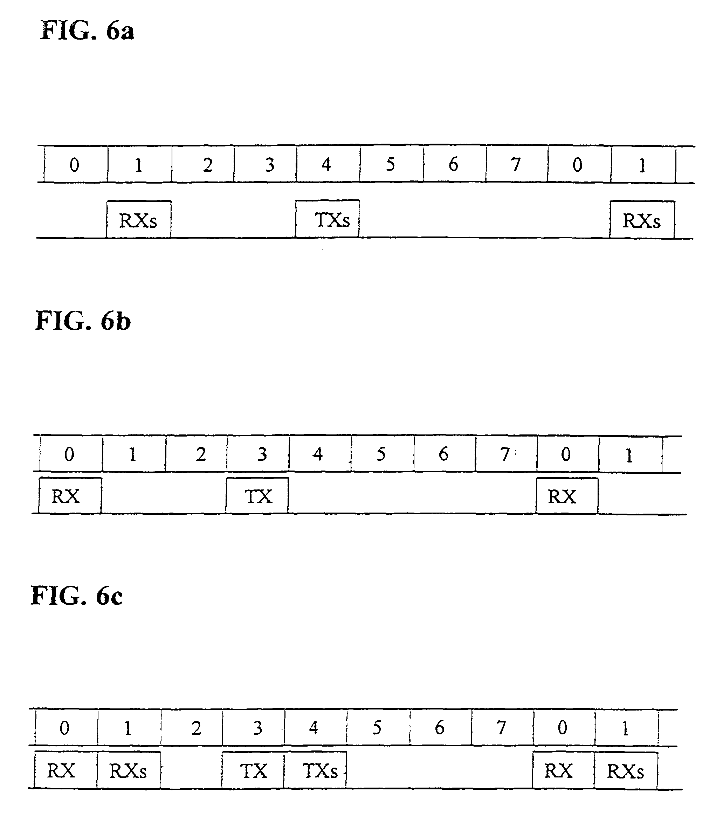

Fig. 6 zeigt einen Sende/Empfangsvorgang innerhalb eines Sende/Empfangs-Zyklus, welcher in acht Zeitschlitze (0 bis 7) unterteilt ist. Das Semiduplexband (vergl. Fig. 6a) ermöglicht, daß auf dergleichen Frequenz gesendet und empfangen werden kann, wobei jeweils in verschiedenen Zeitschlitzen gesendet und empfangen wird. Bezugszeichen RXs bezeichnet dabei den Empfang und TXs das Senden von Signalen im Semiduplexband. Die Zeitschlitze des Semiduplexbands sind mit den Zeitschlitzen des Duplexbands (vergl. Fig. 6b) wie im GSM-System synchronisiert, sie können sich jedoch in der Art der Aussendung sowie in der Länge unterscheiden. Bezugszeichen RX bezeichnet den Empfang und TX das Senden von Signalen im Duplexband. Insgesamt ergibt sich die Möglichkeit, quasigleichzeitig in beiden Bändern zu arbeiten (vergl. Fig. 6c).

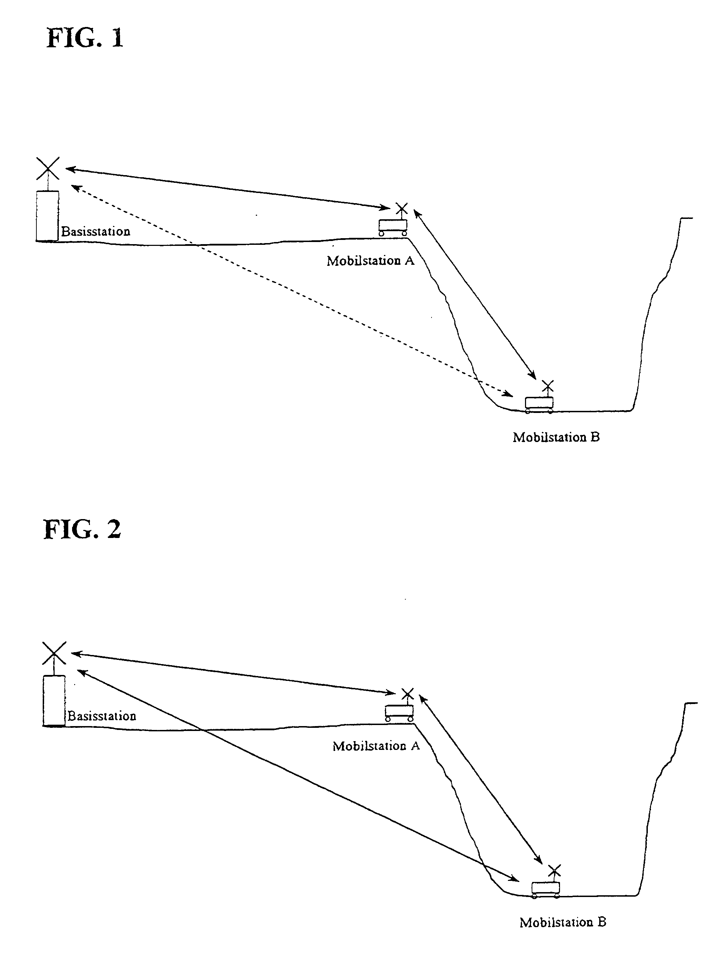

Entsprechend Fig. 1 kommuniziert eine Mobilstation A mit der Basisstation im Duplexbetrieb. Zusätzlich kann die Mobilstation A mit der Mobilstation B eine Kommunikation im Semiduplexbetrieb herstellen. Zwischen der Mobilstation B und der Basisstation besteht keine Verbindung. Es ist somit möglich, daß die Mobilstation A gleichzeitig mit der Basisstation und der Mobilstation B kommuniziert

In Fig. 2 ist ein Fall dargestellt, bei welchem die Mobilstation A als "Repeater" verwendet wird. Wie in dem Fall von Fig. 1 besteht zwischen der Basisstation und der Mobilstation A eine direkte Verbindung, während zwischen der Basisstation und der Mobilstation B keine direkte Verbindung besteht. Jedoch führt die Mobilstation A eine Umsetzung der Informationsübertragung im Semiduplexbetrieb in eine Informationsübertragung im Duplexbetrieb und umgekehrt durch, so daß eine Kommunikation zwischen der Basisstation und der Mobilstation B hergestellt wird. D.h. Daten werden von der Mobilstation B im Semiduplexbetrieb der Mobilstation A übertragen, in der Mobilstation A verarbeitet und im Duplexberrieb der Basisstation weitergeleitet bzw. in umgekehrter Richtung von der Basisstation im Duplexbetrieb der Mobilstation A übertragen, in der Mobilstation A verarbeitet und im Semiduplexbetrieb der Mobilstation B weitergeleitet.

Entsprechend Fig. 3 ist es ebenfalls möglich, daß die Mobilstation A gleichzeitig mit der Mobilstation B und der Mobilstation C im Semiduplexbetrieb kommuniziert oder als "Repeater" Informationen im Semiduplexbetrieb von der Mobilstation B empfängt und sie im Semiduplexbetrieb der anderen Mobilstation C weiterleitet (oder umgekehrt). Eine direkte Kopplung zwischen den Mobilstationen B und C wäre nicht möglich, da sich die Mobilstation B bezüglich der Mobilstation C in einem abgeschatteten Bereich (Tal) befindet.

Möglich ist auch die Bildung einer Kette bestehend aus einer größeren Anzahl von Mobilstationen.

Die Mobilstationen besitzen eine Steuereinrichtung, die zwischen einem Betrieb mit einer oder zwei weiteren Stationen oder aber einem Betrieb als "Repeater" wählt. Die Steuereinrichtung kann gegebenenfalls den Betrieb als "Repeater" automatisch wählen. Um die Spannungsversorgungseinrichtung einer Mobilstation jedoch nicht unkontrolliert zu belasten, läßt sich der Betrieb als "Repeater" sperren.

Der Vorteil des Mobilfunksystems der vorliegenden Erfindung, bei welchem Mobilstationen als "Repeater" betrieben werden können, besteht wie oben beschrieben darin, daß auch Mobilstationen, die durch Abschattung keine direkte Verbindung zu einer Basisstation haben, eine Kommunikation zu anderen Mobilstationen bzw. zur Basisstation herstellen können. Ein weiterer Vorteil besteht darin, daß eine Mobilstation ebenfalls von einem Flugzeug aus betrieben werden kann. Bei einem herkömmlichen Mobilfunksystem ist der Betrieb einer Mobilstation von einem im Luftraum befindlichen Flugzeug aus im Normalfall nicht möglich, da die Mobilstation aus der Menge erreichbarer Basisstationen keine Kommunikation mit einer bestimmten Basisstation herstellen kann. Durch Verwendung von Mobilstationen als "Repeater", die auf einer ihnen zugeeigneten Frequenz arbeiten, kann jedoch eine Kommunikation mit einer Basisstation hergestellt werden.

Des weiteren kann das Mobilfunksystem der vorliegenden Erfindung selbstorganisierend ausgelegt werden. Es kann durch neuartige Übertragungsverfahren wie JD-CMDA sehr hohe Übertragungskapazitäten bereitzustellen. Durch ein derartiges Kombisystem ist es möglich, nahezu alle vorkommenden Funk- und Mobilfunkanforderungen, die mit begrenzter Reichweite und gegebenenfalls hohen Verkehrsdichten arbeiten, zu integrieren: Wireless LAN, DSSR digital short range Radio, LPD Low Power devices, TETRA Bündelfunk und BOS, Bahnfunk, Schnurlose Telefone, Mobiltelefone, Flugfunk, Maritimer Funk, Notrufsysteme sowie schnurlose Busse (für Steuerfunktionen)

Bei einer Ausführungsvariante der Erfindung versteht man unter einem Duplexbetrieb einen Frequenzduplexbetrieb (FDD Frequency Division Duplex) und unter einem Semiduplexbetrieb einen Zeitduplexbetrieb (TDD Time Division Duplex). Dabei können bei FDD (Frequency Division Duplex)-Systemen, wie beispielsweise dem GSM-System oder UTRA(UMTS (Universial Mobile Telephony System) Terrestrial Radio Access)-FDD-Mode, für den Uplink (Mobilstation zur Basisstation) andere Frequenzbänder vorgesehen sein als für den Downlink (Basisstation zur Mobilstation) und bei TDD (Time Division Duplex)-Systemen, wie das DECT (Digital Enhanced Cordless Telecommunications)-System oder den UTA(UMTS (Universial Mobile Telephony System) Terrestrial Radio Access)-TDD-Mode, für den Up- bzw. Downlink unterschiedliche Zeitabschnitte vorgesehen sein.

## Patentansprüche

1. Mobilfunksystem mit einer Mehrzahl von Mobilstationen (A, B, C),
wobei die Mobilstationen Mittel zur Durchführung eines Sende/Empfangsbetriebs im Duplexbetrieb und im Semiduplexbetrieb aufweisen, **dadurch gekennzeichnet, daß**
eine erste Mobilstation (A) Mittel zur gleichzeitigen Durchführung eines Sende/Empfangsbetriebs mit einer Basisstation im Duplexbetrieb und einer zweiten Mobilstation (B) im Semiduplexbetrieb aufweist, und
der Duplexbetrieb als Frequenzduplexbetrieb und der Semiduplexbetrieb als Zeitduplexbetrieb realisiert ist.

2. Mobilfunksystem nach Anspruch 1,
**dadurch gekennzeichnet, daß** die erste Mobilstation (A) Mittel zur Durchführung eines Sende/Empfangsbetriebs mit der Basisstation im Duplexbetrieb und der zweiten Mobilstation (B) im Semiduplexbetrieb derart aufweist, daß der Sende/Empfangsbetrieb zyklisch in Zeitschlitzen durchgeführt wird und die Zeitschlitze für den Duplex- und den Semiduplexbetrieb synchron zueinander verlaufen.

3. Mobilfunksystem nach einem der vorausgehenden Ansprüche,
**dadurch gekennzeichnet, daß** die erste Mobilstation (A) Mittel zur Durchführung eines Sende/Empfangsbetriebs mit der Basisstation im Duplexbetrieb und der zweiten Mobilstation (B) im Semiduplexbetrieb derart aufweist, daß Signale von der zweiten Mobilstation über die erste Mobilstation zu der Basisstation und umgekehrt übertragen werden.

4. Mobilfunksystem nach einem der vorausgehenden Ansprüche,
**dadurch gekennzeichnet, daß** die erste Mobilstation (A) Mittel zur Durchführung eines Sende/Empfangsbetriebs mit der zweiten (B) und einer dritten Mobilstation (C) im Semiduplexbetrieb aufweist.

5. Mobilfunksystem nach einem der vorausgehenden Ansprüche,
**dadurch gekennzeichnet, daß** die erste Mobilstation (A) Mittel zur Durchführung eines Sende/Empfangsbetriebs mit der zweiten (B) und dritten Mobilstation (C) im Semiduplexbetrieb derart aufweist, daß Signale von der zweiten Mobilstation über die erste Mobilstation zu der dritten Mobilstation und umgekehrt übertragen werden.

6. Mobilfunksystem nach einem der vorausgehenden Ansprüche,
**dadurch gekennzeichnet, daß** die in der Mehrzahl vorkommenden Mobilstationen derart aneinander gekoppelt sind, daß eine Kommunikationskette oder ein Kommunikationsnetz gebildet ist.

7. Mobilfunksystem nach einem der vorausgehenden Ansprüche,
**dadurch gekennzeichnet, daß** die erste Mobilstation (A) Mittel zum manuellen oder automatischen Einund Ausschalten der Übertragung von Signalen von der zweiten Mobilstation (B) über die erste Mobilstation (A) zur Basisstation oder zur dritten Mobilstation (C) und umgekehrt aufweist.

8. Mobilstation (A)
mit Mitteln zur gleichzeitigen Durchführung eines Sende/Empfangsbetriebs mit einer Basisstation im Duplexbetrieb und einer zweiten Mobilstation (B) im Semiduplexbetrieb, wobei
der Duplexbetrieb als Frequenzduplexbetrieb und der Semiduplexbetrieb als Zeitduplexbetrieb realisiert ist.

9. Mobilstation (A) nach Anspruch 8,
mit Mitteln zur Durchführung eines Sende/Empfangsbetriebs mit der Basisstation im Duplexbetrieb und der zweiten Mobilstation (B) im Semiduplexbetrieb derart, daß der Sende/Empfangsbetrieb zyklisch in Zeitschlitzen durchgeführt wird und die Zeitschlitze für den Duplex- und den Semiduplexbetrieb synchron zueinander verlaufen.

10. Mobilstation (A) nach einem der Ansprüche 8 bis 9,
mit Mitteln zur Durchführung eines Sende/Empfangsbetriebs mit der Basisstation im Duplexbetrieb und der zweiten Mobilstation (B) im Semiduplexbetrieb derart, daß Signale von der zweiten Mobilstation über die erste Mobilstation zu der Basisstation und umgekehrt übertragen werden.

11. Mobilstation (A) nach einem der Ansprüche 8 bis 10,
mit Mitteln zur Durchführung eines Sende/Empfangsbetriebs mit der zweiten (B) und einer dritten Mobilstation (C) im Semiduplexbetrieb.

12. Mobilstation (A) nach einem der Ansprüche 8 bis 11,
mit Mitteln zur Durchführung eines Sende/Empfangsbetriebs mit der zweiten (B) und dritten Mobilstation (C) im Semiduplexbetrieb derart, daß Signale von der zweiten Mobilstation über die erste Mobilstation zu der dritten Mobilstation und umgekehrt übertragen werden.

13. Mobilstation (A) nach einem der Ansprüche 8 bis 12,
mit Mitteln zum manuellen oder automatischen Ein- und Ausschalten der Übertragung von Signalen von der zweiten Mobilstation (B) über die erste Mobilstation (A) zur Basisstation oder zur dritten Mobilstation (C) und umgekehrt.

14. Mobilstation (A) nach einem der Ansprüche 9 bis 13,
mit Mitteln zur Durchführung eines Sende/Empfangsbetriebs mit der zweiten (B) und dritten Mobilstation (C) im Semiduplexbetrieb derart, daß Signale von der zweiten Mobilstation über die erste Mobilstation zu der dritten Mobilstation und umgekehrt übertragen werden.

15. Mobilstation (A) nach einem der Ansprüche 9 bis 14,
mit Mitteln zum manuellen oder automatischen Ein- und Ausschalten der Übertragung von Signalen von der zweiten Mobilstation (B) über die erste Mobilstation (A) zur Basisstation oder zur dritten Mobilstation (C) und umgekehrt.

## Claims

1. Mobile radio system having a number of mobile stations (A, B, C),
with the mobile stations having means for carrying out transmission/reception operation in the duplex mode and in the semi-duplex mode,
**characterized in that** a first mobile station (A) has means for simultaneously carrying out transmission/reception operation with a base station in the duplex mode and with a second mobile station (B) in the semi-duplex mode, and
the duplex mode is in the form of the frequency division duplex mode, and the semi-duplex mode being in the form of the time division duplex mode.

2. Mobile radio system according to Claim 1, **characterized in that** the first mobile station (A) has means for carrying out transmission/reception operation with the base station in the duplex mode and with the second mobile station (B) in the semi-duplex mode in such a manner that the transmission/reception operation is carried out cyclically in timeslots, and the timeslots for the duplex and semi-duplex mode run synchronously with respect to one another.

3. Mobile radio system according to one of the preceding claims, **characterized in that** the first mobile station (A) has means for carrying out transmission/reception operation with the base station in the duplex mode and with the second mobile station (B) in the semi-duplex mode, in such a manner that signals from the second mobile station are transmitted via the first mobile station to the base station, and vice versa.

4. Mobile radio system according to one of the preceding claims, **characterized in that** the first mobile station (A) has means for carrying out transmission/reception operation with the second mobile station (B) and with a third mobile station (C) in the semi-duplex mode.

5. Mobile radio system according to one of the preceding claims, **characterized in that** the first mobile station (A) has means for carrying out transmission/reception operation with the second (B) and the third (C) mobile station in the semi-duplex mode, in such a manner that signals from the second mobile station are transmitted via the first mobile station to the third mobile station, and vice versa.

6. Mobile radio system according to one of the preceding claims, **characterized in that** the mobile stations that are among the number of mobile stations are coupled to one another in such a manner that a communication chain or a communication network is formed.

7. Mobile radio system according to one of the preceding claims, **characterized in that** the first mobile station (A) has means for manually or automatically switching on and off the transmission of signals from the second mobile station (B) via the first mobile station (A) to the base station or to the third mobile station (C), and vice versa.

8. Mobile station (A)
having means for simultaneously carrying out transmission/reception operation with a base station in the duplex mode and with a second mobile station (B) in the semi-duplex mode, with
the duplex mode being in the form of the frequency division duplex mode, and the semi-duplex mode being in the form of a time division duplex mode.

9. Mobile station (A) according to Claim 8,
having means for carrying out transmission/reception operation with the base station in the duplex mode and with the second mobile station (B) in the semi-duplex mode, in such a manner that the transmission/reception operation is carried out cyclically in timeslots, and the timeslots for the duplex and semi-duplex mode run synchronously with respect to one another.

10. Mobile station (A) according to one of Claims 8 to 9, having means for carrying out transmission/reception operation with the base station in the duplex mode and with the second mobile station (B) in the semi-duplex mode, in such a manner that signals from the second mobile station are transmitted via the first mobile station to the base station, and vice versa.

11. Mobile station (A) according to one of Claims 8 to 10, having means for carrying out transmission/reception operation with the second mobile station (B) and with a third mobile station (C) in the semi-duplex mode.

12. Mobile station (A) according to one of Claims 8 to 11, having means for carrying out transmission/reception operation with the second (B) and the third (C) mobile station in the semi-duplex mode, in such a manner that signals from the second mobile station are transmitted via the first mobile station to the third mobile station, and vice versa.

13. Mobile station (A) according to one of Claims 8 to 12, having means for manually or automatically switching on and off the transmission of signals from the second mobile station (B) via the first mobile station (A) to the base station or to the third mobile station (C), and vice versa.

14. Mobile station (A) according to one of Claims 9 to 13, having means for carrying out transmission/reception operation with the second (B) and the third (C) mobile station in the semi-duplex mode, in such a manner that signals from the second mobile station are transmitted via the first mobile station to the third mobile station, and vice versa.

15. Mobile station (A) according to one of Claims 9 to 14, having means for manually or automatically switching on and off the transmission of signals from the second mobile station (B) via the first mobile station (A) to the base station or to the third mobile station (C), and vice versa.

## Revendications

1. Système radiotéléphonique mobile ayant une pluralité de stations mobiles (A, B, C)
les stations mobiles présentant des moyens pour la réalisation d'un mode d'émission/réception en mode duplex et en mode semi-duplex,
**caractérisé en ce que**
une première station mobile (A) présente des moyens pour la réalisation simultanée d'un mode d'émission/réception avec une station de base en mode duplex et avec une deuxième station mobile (B) en mode semi-duplex, et
**en ce que** le mode duplex est réalisé comme mode duplex de fréquence et le mode semi-duplex comme mode duplex dans le temps.

2. Système radiotéléphonique mobile selon la revendication 1,
**caractérisé en ce que** la première station mobile (A) présente des moyens pour la réalisation d'un mode d'émission/réception avec la station de base en mode duplex et avec la deuxième station mobile (B) en mode semi-duplex, de telle manière que le mode d'émission/réception est réalisé de manière cyclique en créneaux temporels et que les créneaux temporels se déroulent de manière synchrone les uns par rapport aux autres pour le mode duplex et le mode semi-duplex.

3. Système radiotéléphonique mobile selon l'une quelconque des revendications précédentes,
**caractérisé en ce que** la première station mobile (A) présente des moyens pour la réalisation d'un mode d'émission/réception avec la station de base en mode duplex et avec la deuxième station mobile (B) en mode semi-duplex, de telle manière que les signaux sont transmis de la deuxième station mobile vers la station de base par l'intermédiaire de la première station mobile, et vice versa.

4. Système radiotéléphonique mobile selon l'une quelconque des revendications précédentes,
**caractérisé en ce que** la première station mobile (A) présente des moyens pour la réalisation d'un mode d'émission/réception avec la deuxième station mobile (B) et une troisième station mobile (C) en mode semi-duplex.

5. Système radiotéléphonique mobile selon l'une quelconque des revendications précédentes,
**caractérisé en ce que** la première station mobile (A) présente des moyens pour la réalisation d'un mode d'émission/réception avec la deuxième station mobile (B) et la troisième station mobile (C) en mode semi-duplex, de telle manière que les signaux sont transmis de la deuxième station mobile à la troisième station mobile par l'intermédiaire de la première station mobile, et vice versa.

6. Système radiotéléphonique mobile selon l'une quelconque des revendications précédentes,
**caractérisé en ce que** les stations mobiles présentes en nombre multiple sont couplées entre elles de telle manière qu'une chaîne de communication ou qu'un réseau de communication est formé.

7. Système radiotéléphonique mobile selon l'une quelconque des revendications précédentes,
**caractérisé en ce que** la première station mobile (A) présente des moyens pour la mise en circuit et la mise hors circuit manuelles ou automatiques de la transmission de signaux de la deuxième station mobile (B) à la station de base ou à la troisième station mobile (C) par l'intermédiaire de la première station mobile (A), et vice versa.

8. Station mobile (A)
munie de moyens pour la réalisation simultanée d'un mode d'émission/réception avec une station de base en mode duplex et avec une deuxième station mobile (B) en mode semi-duplex,
le mode duplex étant réalisé comme mode duplex de fréquence et le mode semi-duplex comme mode duplex dans le temps.

9. Station mobile (A) selon la revendication 8,
munie de moyens pour la réalisation d'un mode d'émission/réception avec la station de base en mode duplex et avec la deuxième station mobile (B) en mode semi-duplex, de telle manière que le mode d'émission/réception est réalisé de manière cyclique en créneaux temporels et que les créneaux temporels se déroulent de manière synchrone les uns par rapport aux autres pour le mode duplex et le mode semi-duplex.

10. Station mobile (A) selon l'une quelconque des revendications 8 à 9,
munie de moyens pour la réalisation d'un mode d'émission/réception avec la station de base en mode duplex et avec la deuxième station mobile (B) en mode semi-duplex, de telle manière que les signaux sont transmis de la deuxième station mobile à la station de base par l'intermédiaire de la première station mobile, et vice versa.

11. Station mobile (A) selon l'une quelconque des revendications 8 à 10,
munie de moyens pour la réalisation d'un mode d'émission/réception avec la deuxième station mobile (B) et une troisième station mobile (C) en mode semi-duplex.

12. Station mobile (A) selon l'une quelconque des revendications 8 à 11,
munie de moyens pour la réalisation d'un mode d'émission/réception avec la deuxième station mobile (B) et la troisième station mobile (C) en mode semi-duplex, de telle manière que les signaux sont transmis de la deuxième station mobile à la troisième station mobile par l'intermédiaire de la première station mobile, et vice versa.

13. Station mobile (A) selon l'une quelconque des revendications 8 à 12,
munie de moyens pour la mise en circuit et la mise hors circuit manuelles ou automatiques de la transmission de signaux de la deuxième station mobile (B) à la station de base ou à la troisième station mobile (C) par l'intermédiaire de la première station mobile (A), et vice versa.

14. Station mobile (A) selon l'une quelconque des revendications 9 à 13,
munie de moyens pour la réalisation d'un mode d'émission/réception avec la deuxième station mobile (B) et la troisième station mobile (C) en mode semi-duplex, de telle manière que les signaux sont transmis de la deuxième station mobile à la troisième station mobile par l'intermédiaire de la première station mobile, et vice versa.

15. Station mobile (A) selon l'une quelconque des revendications 9 à 14,
munie de moyens pour la mise en circuit et la mise hors circuit manuelles ou automatiques de la transmission de signaux de la deuxième station mobile (B) à la station de base ou à la troisième station mobile (C) par l'intermédiaire de la première station mobile (A), et vice versa.
